# FASCICULE DE BREVET EUROPEEN

(11) **EP 3 495 773 B1**
(45) Date de publication et mention de la délivrance du brevet: **15.03.2023**
(21) Numéro de dépôt: 18210843.1
(22) Date de dépôt: 06.12.2018
(51) Int. Cl.: G01C 21/20, A61H 3/00, H04W 4/02

(54) **PROCÉDÉ D'AIDE AU DÉPLACEMENT D'UNE PERSONNE À MOBILITÉ RÉDUITE DANS UN MOYEN DE TRANSPORT PUBLIC, PRODUIT PROGRAMME D'ORDINATEUR ET SYSTÈME ASSOCIÉS**
HILFSVERFAHREN ZUM BEFÖRDERN EINER PERSON MIT EINGESCHRÄNKTER MOBILITÄT IN EINEM ÖFFENTLICHEN TRANSPORTMITTEL, ENTSPRECHENDES COMPUTERPROGRAMMPRODUKT UND ENTSPRECHENDES SYSTEM
METHOD FOR ASSISTING THE MOVEMENT OF A MOBILITY-IMPAIRED PERSON IN A PUBLIC TRANSPORT MEANS, ASSOCIATED COMPUTER PROGRAM PRODUCT AND SYSTEM

(30) Priorité: 07.12.2017 FR 1761796
(43) Date de publication de la demande: 12.06.2019
(73) Titulaire: ALSTOM Transport Technologies, 93400 Saint-Ouen (FR)
(72) Inventeur: JUNG, Luc, 69500 BRON (FR); MIGNARD, Clémentine, 42000 SAINT-ETIENNE (FR); WOESSNER, Wilken, 76131 KARLSRUHE (DE); CASSOU-MOUNAT, Jean, 69003 LYON (FR); FOROOZAN, Sarah, 69100 VILLEURBANNE (FR); SIMONET, Hélène, 69006 LYON (FR); BACHELIN, Pierre, 42000 SAINT-ETIENNE (FR); MEURICE, Solène, 69100 VILLEURBANNE (FR); NODET, Tanguy, 21240 TALANT (FR); GOUTAY, Mathieu, 69003 LYON (FR); HEMERY, Yannis, 69230 SAINT GENIS LAVAL (FR)
(74) Mandataire: Lavoix

(56) Documents cités:
- EP-A1- 1 750 234
- EP-A2- 2 395 495
- WO-A1-2010/015763
- FR-A1- 2 846 499
- FR-B1- 2 846 499
- US-A1- 2017 185 991
- "Informative input to standardization;M2M(12)23_067_BUTLER_Use_C ases_and_requirements", ETSI DRAFT; M2M(12)23_067_BUTLER_USE_CASES_AND_REQUIRE MENTS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M, 27 novembre 2012 (2012-11-27), pages 1-172, XP014167199,

## Description

La présente invention concerne un procédé d'aide au déplacement d'une personne à mobilité réduite dans un moyen de transport public.

La présente invention concerne également un produit programme d'ordinateur et un système associés.

Au sens de la présente invention, par personne à mobilité réduite, on entend toute personne ayant des difficultés de manière permanente ou temporaire à se déplacer dans un espace public, notamment dans le transport public. Ainsi, à titre d'exemple d'une personne à mobilité réduite, on peut citer une personne souffrant d'un handicap sensoriel ou intellectuel, ou encore une personne se déplaçant en fauteuil roulant.

De manière connue, il existe de nombreuses contraintes rendant très difficile et parfois même impossible, l'utilisation du transport public par les personnes à mobilité réduite.

Outre les difficultés relatives à l'infrastructure d'accès à des stations ou à des quais par une personne à mobilité réduite, certains types de handicap rendent difficile pour cette personne l'embarquement dans le moyen de transport correspondant ainsi que le voyage à bord de celui-ci.

Même si des emplacements adaptés aux personnes à mobilité réduite existent généralement dans les moyens de transport, ces emplacements peuvent parfois être difficilement accessibles pour ces personnes ou être occupés dans certains cas par d'autres passagers.

On connait également des solutions pour les déplacements d'une personne à mobilité réduire proposées par le document « Informative input to standardization, BUTLER Use-Cases and Requirements ».

La présente invention a pour but de simplifier les déplacements des personnes à mobilité réduite dans le transport public, et notamment dans des moyens de transport munis d'emplacements adaptés pour ces personnes.

À cet effet, l'invention a pour objet un procédé d'aide au déplacement d'une personne à mobilité réduite, conforme à la revendication 1.

Suivant d'autres aspects avantageux de l'invention, le procédé comprend une ou plusieurs des caractéristiques des revendications 2 à 8.

L'invention a également pour objet un produit programme d'ordinateur comportant des instructions logicielles qui, lorsque mises en oeuvre par un équipement informatique, mettent en oeuvre le procédé tel que défini précédemment.

L'invention a également pour objet un système d'aide au déplacement d'une personne à mobilité réduite comprenant des moyens mettant en oeuvre le procédé tel que décrit précédemment.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'une station d'embarquement à bord d'un moyen de transport ;
- la figure 2 est une vue schématique d'un système d'aide au déplacement selon l'invention, le système étant disposé au moins partiellement dans la station de la figure 1 ;
- la figure 3 est un organigramme d'un procédé d'aide au déplacement selon l'invention, le procédé étant mis en oeuvre par le système d'aide au déplacement de la figure 2.

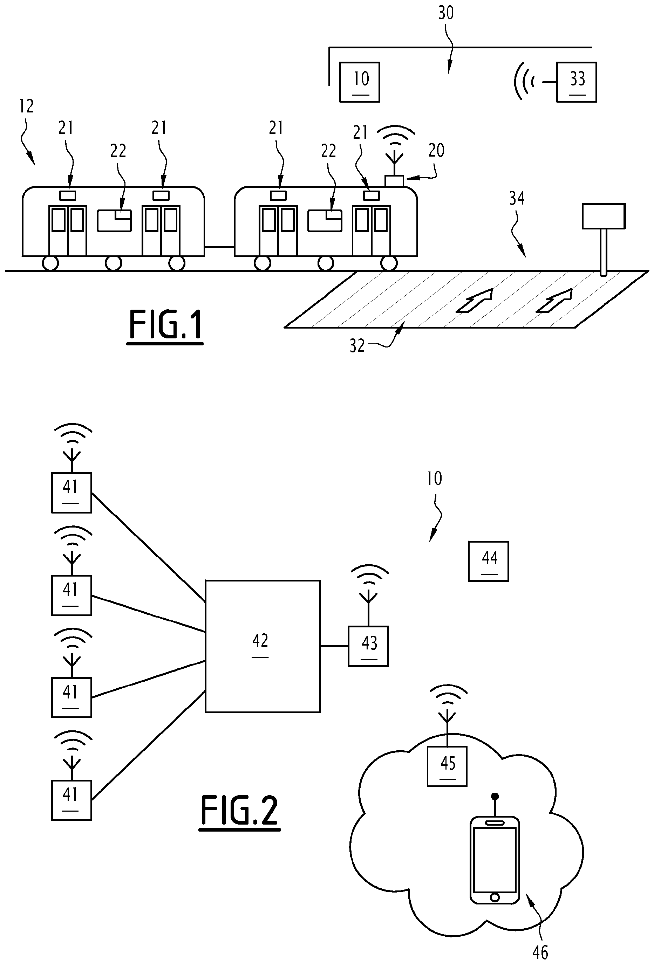

Le système d'aide au déplacement 10 visible sur la figure 1 permet de simplifier le déplacement d'une personne à mobilité réduite dans un moyen de transport public 12.

Par moyen de transport public, on entend tout moyen de transport habituellement utilisé dans un milieu urbain ou à l'extérieur de celui-ci. Ainsi, à titre d'exemple, on peut citer un train, une rame de métro, un tramway, un trolleybus, un autobus, une navette, etc.

De manière connue en soi, le moyen de transport 12 définit différentes zones de transport de passagers. L'accès des passagers dans ces zones de transport s'effectue par exemple via des portes différentes.

Ainsi, par exemple, lorsque le moyen de transport 12 est une rame de métro, celle-ci comporte une pluralité de wagons, chaque wagon comportant une pluralité de portes. Dans cet exemple, une zone de transport est définie par une zone adjacente à l'une de ces portes. Chaque zone de transport comporte par exemple un emplacement réservé aux personnes à mobilité réduite.

Le moyen de transport 12 comporte un moyen de communication 20, une pluralité de capteurs 21 disposes dans des zones de transport différentes et des moyens de diffusion d'information aux passagers 22.

Le moyen de communication 20 permet de communiquer avec un moyen de communication analogue disposé par exemple dans une station comme cela sera expliqué par la suite. Cette communication s'effectue par exemple via des signaux radioélectriques portant des informations communiquées.

Les capteurs 21 permettent de déterminer la densité des passagers dans chacune des zones de transport. Pour ce faire, ils sont par exemple disposés à proximité de chaque porte du moyen de transport 12 et sont adaptés pour déterminer le nombre des passagers entrants et sortants à travers la porte correspondante.

Les moyens de diffusion d'information 22 comprennent des moyens de diffusion visuelle d'information, comme par exemple des écrans, et des moyens de diffusion auditive d'information, comme par exemple des hautparleurs. Ces moyens permettent de transmettre notamment des informations reçues via le moyen de communication 20 aux passagers.

Selon un exemple de réalisation, les moyens de diffusion d'information 22 comprennent en outre des moyens de communication avec la personne à mobilité réduite.

Le moyen de transport 12 est adapté pour embarquer ou débarquer des passagers dans une station d'embarquement 30 illustré sur la figure 1.

En référence à cette figure 1, la station 30 comprend un quai d'embarquement 32 dans le moyen de transport 12, un moyen de communication 33 et des moyens de diffusion d'information 34.

Le moyen de communication 33 est apte à communiquer avec le moyen de communication 20 du moyen de transport 12 et présente par exemple une structure analogue à celui-ci.

Les moyens de diffusion d'information 34 permettent de diffuser des informations aux passagers présents dans la station 30 et notamment sur le quai 32.

Comme dans le cas précédent, ces moyens de diffusion d'information 34 comprennent des moyens de diffusion visuelle d'information et des moyens de diffusion auditive d'information. Ces moyens sont par exemple présentés par des écrans, des hautparleurs, des vidéoprojecteurs, des panneaux animés, etc.

Avantageusement, au moins un moyen de diffusion d'information est disposé à proximité de chaque porte lorsque le moyen de transport 12 est arrêté sur le quai 32 et permet d'indiquer de façon visuelle et/ou auditive cette porte.

Le système d'aide au déplacement 10 est disposé au moins partiellement dans la station 30.

Ainsi, en référence à la figure 2, le système d'aide au déplacement 10 comprend une pluralité de capteurs 41, un module de traitement 42, un module de communication 43, un serveur distant 44 et au moins un système connecté.

Le système connecté appartient à la personne à mobilité réduite et comprend un objet connecté 45 et de préférence, un téléphone intelligent 46.

L'objet connecté 45 présente par exemple un porte-clés muni d'un bouton d'appel.

Cet objet connecté 45 comprend un émetteur apte à émettre des signaux d'identification relatifs à la personne à mobilité réduite. L'émission de ces signaux s'effectue par exemple en utilisant la technologie Bluetooth Low Energy ce qui signifie « Bluetooth faible consommation » en français.

Les signaux d'identification comprennent notamment un identifiant et une information relative au type de handicap de la personne à mobilité réduite.

En outre, en cas d'activation du bouton d'appel, l'émetteur de cet objet 45 est apte à émettre des signaux spécifiques destinés au téléphone intelligent 46.

Le téléphone intelligent 46 est un téléphone de type smartphone connu en soi. Il comporte notamment une application qui est apte à envoyer une demande d'aide au serveur distant 44 en cas de détection des signaux spécifiques émis par l'objet 45. Cette demande est transmise via un réseau mobile tel que Wi-Fi, 2G, 3G, 4G, 5G ou tout autre réseau sans fil.

Le serveur distant 44 est apte à acquérir des informations transmises par le téléphone intelligent 46 pour transmettre au moins certaines de ces informations à des personnes, appelées aidants par la suite.

À cet effet, le serveur 44 comporte une base de données comprenant des informations relatives à des aidants enregistrés via des applications mobiles installées sur des téléphones intelligents de ces personnes. Chaque aidant présente ainsi un volontaire prêt à aider une personne à mobilité réduite.

Les capteurs 41 sont disposés dans la station 30 dans des endroits différents et sont aptes à recevoir des signaux issus de l'objet connecté 45.

Le module de communication 43 est un récepteur/émetteur d'information qui est relié au moyen de communication 33 de la station 30 par un réseau informatique filaire ou sans fil et apte à communiquer avec celui-ci comme cela sera expliqué par la suite.

Le module de traitement 42 présente par exemple au moins partiellement un module électronique comprenant des circuits logiques et/ou un logiciel exécutable par un calculateur. Ce module de traitement 42 est apte à acquérir des informations issues des capteurs 41 et du module de communication 43, et à traiter ces informations notamment pour commander le fonctionnement des moyens de diffusion d'information 22, 34 du moyen de transport 12 et de la station 30, comme cela sera expliqué par la suite.

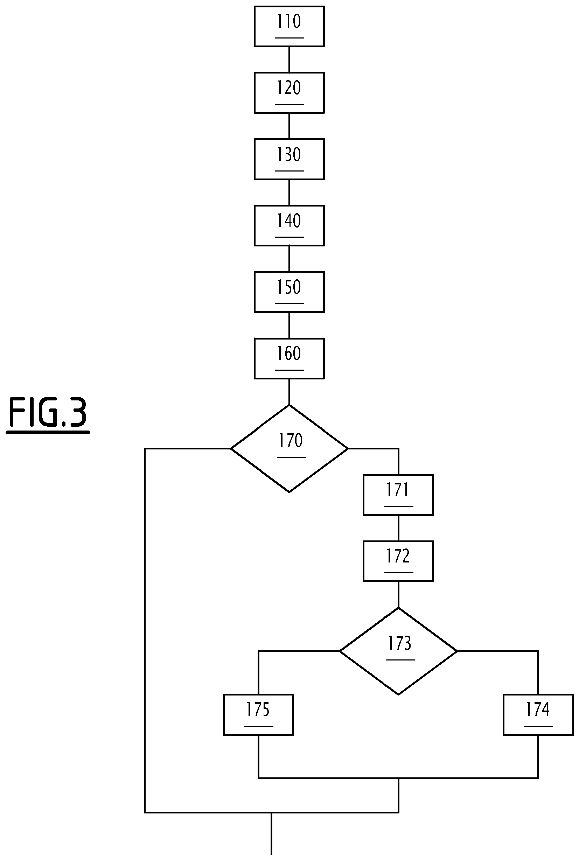

Le procédé d'aide au déplacement d'une personne à mobilité réduite mis en oeuvre par le système d'aide au déplacement 10 sera désormais expliqué en référence à la figure 3 présentant un organigramme de ses étapes.

Lors d'une étape initiale 110, le système d'aide au déplacement 10 détecte la présence de la personne à mobilité réduite dans la station 30. En particulier, lors de cette étape, au moins un des capteurs 41 détecte des signaux d'identification provenant de l'objet connecté 45 de la personne à mobilité réduite.

Lors de l'étape 120 suivante, au moins certains autres capteurs 41 détectent les mêmes signaux d'identification et les transmettent au module de traitement 42.

Le module de traitement 42 analyse ces signaux ainsi que la position de chacun des capteurs 41 ayant transmis ces signaux et en déduit la localisation de la personne à mobilité réduite dans la station 30. Cela est effectué en utilisant des méthodes de triangulation connues en soi.

Le module de traitement 42 détermine également l'identité de la personne à mobilité réduite et le type de son handicap en utilisant les informations transmises par les signaux d'identification.

En variante ou en complément, la localisation de la personne à mobilité réduite s'effectue en outre par des moyens de géolocalisation intégré dans son téléphone intelligent 46 qui transmet cette information au module de traitement 42.

Lors de l'étape suivante 130 mise en oeuvre lorsque la personne à mobilité réduite s'approche du quai 32, le module de traitement 42 acquiert des informations relatives à la densité de passagers dans chacune des zones de transport du moyen de transport 12 qui est par exemple en ce moment à l'approche de la station 30.

Pour ce faire, le module de communication 43 du système 10 communique avec le moyen de communication 33 de la station 30 qui communique à son tour avec le moyen de communication 20 du moyen de transport 12 qui acquiert les informations correspondantes acquises par les capteurs 21.

En variante, le module de communication 43 du système 10 communique directement avec le moyen de communication 20 du moyen de transport 12.

Puis, lors de l'étape suivante 140, le module de traitement 42 détermine une zone de transport adaptée au transport de la personne à mobilité réduite en analysant notamment les informations relatives à la densité des passagers dans chacune des zones et à l'aménagement existant dans chacune de ces zones.

Puis, lors de l'étape suivante 150, le module de traitement 42 commande la diffusion d'informations destinées à la personne à mobilité réduite et indiquant l'accès à la zone de transport adaptée. Cette diffusion s'effectue via les moyens de diffusion d'information 34 (visuels ou auditifs) de la station et prennent par exemple en compte le type de handicap de la personne à mobilité réduite.

Pour ce faire, le module de traitement 42 détermine d'abord les informations à diffuser par les différents moyens de diffusion d'information 34 sur le quai et puis, transmet ces informations vers les moyens de diffusion 34 correspondants via le module de communication 43 et le moyen de communication 33.

Avantageusement, les informations ainsi diffusées sur le quai 32 indiquent à la personne à mobilité réduite le futur emplacement de la porte du moyen de transport 12 donnant l'accès à la zone adaptée lorsque le moyen de transport 12 arrivera sur le quai 32.

Lors de l'étape 160 mise en oeuvre par exemple simultanément avec l'étape 150 ou après celle-ci, le module de traitement 42 commande la diffusion d'informations destinées aux passagers du moyen de transport 12 et indiquant une entrée prochaine de la personne à mobilité réduite. Ces informations sont diffusées via les moyens de diffusion d'information 22 du moyen de transport 12 et invitent par exemple les passagers concernés à libérer l'emplacement réservé à la personne à mobilité réduite dans la zone de transport adaptée.

Comme dans l'étape précédente, pour ce faire, le module de traitement 42 détermine d'abord les informations à diffuser par les différents moyens de diffusion d'information 22 du moyen de transport 12 et puis, transmet ces informations vers les moyens de diffusion 22 correspondants via le module de communication 43, le moyen de communication 33 et le moyen de communication 20.

Lorsque lors de l'étape 170, la personne à mobilité réduite a besoin d'une aide supplémentaire, elle active le bouton appel sur l'objet connecté 45 et l'étape 171 suivante est alors exécutée.

Lors de cette étape 171, l'objet connecté 45 transmet un signal spécifique au téléphone intelligent 46 qui génère alors une demande d'aide à la personne à mobilité réduite.

Puis, le téléphone 46 transmet cette demande au serveur distant 44 qui acquiert ensuite cette demande.

Lors de l'étape 172 suivante, le serveur distant 44 transmet la demande d'aide à un ensemble d'aidants enregistrés.

Cet ensemble peut par exemple comprendre uniquement des aidants se trouvant à proximité de la personne à mobilité réduite.

Lors de l'étape 173 suivante, chacun des aidants reçoit la demande d'aide sur son application avec la localisation exacte de la personne à mobilité réduite et a la possibilité soit d'accepter la demande soit de la décliner.

Lorsque l'un des aidants propose son aide en réponse à la demande d'aide, lors de l'étape 174, le serveur distant 44 le met en contact avec la personne à mobilité réduite en lui envoyant par exemple une photographie de la personne.

En complément, lors de l'étape 175, le serveur 44 fait appel à un service d'urgence formé par exemple d'employés dans la station 30.

On conçoit alors que la présente invention permet de simplifier considérablement les déplacements des personnes à mobilité réduite dans le transport public.

En particulier, elle permet d'indiquer à ces personnes une zone de transport adaptée dans le moyen de transport correspondant.

Cette indication s'effectue via des moyens de diffusion d'information présents dans la station.

De plus, l'invention permet d'informer les autres passagers lorsqu'une personne à mobilité réduite a l'intention de monter dans le moyen de transport correspondant. Ces passagers pourront alors libérer de la place pour cette personne.

Finalement, la personne à mobilité réduite a la possibilité de demander de l'aide en appuyant simplement sur un bouton situé sur un objet connecté qui est séparé de son téléphone. Cet objet peut par exemple être rangé dans une poche facilement accessible par la personne à mobilité réduite. En effet, le handicap de cette personne peut rendre délicate l'utilisation de son téléphone le long de son parcours. Cela présente en outre un risque considérable de vol du téléphone tenu notamment par une personne malvoyante.

## Revendications

1. Procédé d'aide au déplacement d'une personne à mobilité réduite souhaitant embarquer à bord d'un moyen de transport public (12), la personne à mobilité réduite étant munie d'un système connecté émettant des signaux d'identification comprenant un identifiant de la personne à mobilité réduite ;
le procédé comprenant les étapes suivantes :
- détection (110) de la présence de la personne à mobilité réduite dans une station d'embarquement (30) à bord du moyen de transport (12) en détectant les signaux d'identification émis par le système connecté ;
- détermination d'une localisation (120) de la personne à mobilité réduite dans la station (30) ;
- à l'arrivée de la personne à mobilité réduite sur un quai d'embarquement (32) à bord du moyen de transport (12), acquisition (130) d'informations relatives à la densité de passagers dans différentes zones de transport du moyen de transport (12) et détermination (140) d'une zone de transport adaptée au transport de la personne à mobilité réduite ;
le procédé étant **caractérisé par** les étapes suivantes:
- diffusion (150) sur le quai d'embarquement (32) d'informations destinées à la personne à mobilité réduite et indiquant l'accès à la zone de transport adaptée, via des moyens de diffusion visuelle (34) et/ou des moyens de diffusion sonore (34) présents sur le quai d'embarquement (32)
- avant l'arrivée à la station (30) du moyen transport (12), diffusion (160) dans le moyen de transport (12) d'informations destinées aux passagers de ce moyen de transport (12) et indiquant une entrée prochaine de la personne à mobilité réduite.

2. Procédé selon la revendication 1, dans lequel les signaux d'identification comprennent en outre le type de handicap de la personne à mobilité réduite.

3. Procédé selon la revendication 2, dans lequel les informations destinées à la personne à mobilité réduite sont diffusées sur le quai d'embarquement (32) via des moyens de diffusion visuelle (34) ou des moyens de diffusion auditive (34) en fonction du type de handicap de la personne à mobilité réduite.

4. Procédé selon l'une quelconque des revendications précédentes, dans lequel les signaux d'identification sont émis par le système connecté selon la technologie Bluetooth Low Energy ou par un autre moyen de communication sans fil.

5. Procédé selon l'une quelconque des revendications précédentes, dans lequel le système connecté comprend un objet connecté (45) et de préférence, un téléphone intelligent (46) distinct de l'objet connecté (45) et connecté à l'objet connecté (45) ;
avantageusement, l'objet connecté (45) comprenant un bouton d'appel et le procédé comprenant en outre une étape d'acquisition (171) d'une demande d'aide émise par la personne à mobilité réduite, la demande d'aide étant transmise par le téléphone intelligent (46) à la suite de l'activation par la personne à mobilité réduite du bouton d'appel sur l'objet connecté (45).

6. Procédé selon la revendication 5, comprenant en outre une étape de diffusion (172) de la demande d'aide émise par la personne à mobilité réduite à un ensemble de personnels aidants enregistrés via un téléphone intelligent appartenant à chacun des personnels aidants.

7. Procédé selon la revendication 5 ou 6, dans lequel la détermination de la localisation de la personne à mobilité réduite s'effectue par des moyens de géolocalisation intégrés dans le téléphone intelligent.

8. Procédé selon l'une quelconque des revendications 1 à 6, dans lequel la détermination de la localisation de la personne à mobilité réduite s'effectue par triangulation des signaux d'identification.

9. -Système (10) d'aide au déplacement d'une personne à mobilité réduite comprenant des moyens mettant en oeuvre un procédé selon l'une quelconque des revendications 1 à 8.

10. Produit programme d'ordinateur comportant des instructions logicielles qui, lorsque mises en oeuvre par un équipement informatique, mettent en oeuvre un procédé selon l'une quelconque des revendications 1 à 8 par un système selon la revendication 9.

## Patentansprüche

1. Verfahren zur Unterstützung der Fortbewegung einer Person mit eingeschränkter Mobilität an Bord eines öffentlichen Verkehrsmittels (12), wobei die Person mit eingeschränkter Mobilität mit einem verbundenen System versehen ist, das Identifikationssignale aussendet, umfassend einen Identifikator der Person mit eingeschränkter Mobilität;
das Verfahren umfassend die folgenden Schritte:
- Erfassen (110) der Anwesenheit der Person mit eingeschränkter Mobilität an einer Einstiegsstation (30) an Bord des Transportmittels (12) durch Erfassen der Identifikationssignale, die von dem verbundenen System gesendet werden;
- Bestimmen eines Standorts (120) der Person mit eingeschränkter Mobilität in der Station (30);
- bei Ankunft der Person mit eingeschränkter Mobilität an einer Einstiegsplattform (32) an Bord des Transportmittels (12), Erfassen (130) von Informationen in Bezug auf die Passagierdichte in verschiedenen Transportbereichen des Transportmittels (12) und Bestimmen (140) eines Transportbereichs, der für die Beförderung der Person mit eingeschränkter Mobilität angepasst ist;
wobei das Verfahren durch die folgenden Schritte gekennzeichnet ist:
- Verbreiten (150) von Informationen auf der Einstiegsplattform (32), die für die Person mit eingeschränkter Mobilität bestimmt sind und den Zugang zu dem angepassten Transportbereich angeben, über visuelle Verbreitungsmittel (34) und/oder akustische Verbreitungsmittel (34), die auf der Einstiegsplattform (32) vorhanden sind
- vor Ankunft des Transportmittels (12) an der Station (30), Ausstrahlen (160) von Informationen in dem Transportmittel (12), die für die Passagiere des Transportmittels (12) bestimmt sind und einen bevorstehenden Einstieg der Person mit eingeschränkter Mobilität angeben.

2. Verfahren nach Anspruch 1, wobei die Identifikationssignale zusätzlich die Art der Behinderung der Person mit eingeschränkter Mobilität umfassen.

3. Verfahren nach Anspruch 2, wobei die für die Person mit eingeschränkter Mobilität bestimmten Informationen auf der Einstiegsplattform (32) über visuelle (34) oder auditive (34) Verbreitungsmittel abhängig von der Art der Behinderung der Person mit eingeschränkter Mobilität verbreitet werden.

4. Verfahren nach einem der vorherigen Ansprüche, wobei die Identifikationssignale von dem verbundenen System gemäß der Bluetooth Low Energy-Technologie oder über ein anderes drahtloses Kommunikationsmittel gesendet werden.

5. Verfahren nach einem der vorherigen Ansprüche, wobei das verbundene System ein verbundenes Objekt (45) und vorzugsweise ein Smartphone (46) umfasst, das sich von dem verbundenen Objekt (45) unterscheidet und mit dem verbundenen Objekt (45) verbunden ist;
vorteilhafterweise, wobei das verbundene Objekt (45) eine Ruftaste umfasst und das Verfahren ferner einen Schritt eines Erfassens (171) einer von der Person mit eingeschränkter Mobilität ausgegebenen Hilfeanfrage umfasst, wobei die Hilfeanfrage nach Aktivierung der Ruftaste an dem verbundenen Objekt (45) von dem Smartphone (46) durch die Person mit eingeschränkter Mobilität übertragen wird.

6. Verfahren nach Anspruch 5, ferner umfassend einen Schritt eines Verbreitens (172) des von der Person mit eingeschränkter Mobilität ausgegebenen Hilfeersuchens an eine Gruppe von registrierten helfenden Mitarbeitern über ein Smartphone, das jedem der helfenden Mitarbeiter gehört.

7. Verfahren nach Anspruch 5 oder 6, wobei die Bestimmung des Standorts der Person mit eingeschränkter Mobilität durch in das Smartphone integrierte Geolokalisierungseinrichtungen erfolgt.

8. Verfahren nach einem der Ansprüche 1 bis 6, wobei die Bestimmung des Standorts der Person mit eingeschränkter Mobilität durch Triangulation der Identifikationssignale erfolgt.

9. System (10) zur Unterstützung der Fortbewegung einer Person mit eingeschränkter Mobilität, umfassend Einrichtungen, die ein Verfahren nach einem der Ansprüche 1 bis 8 implementieren.

10. Computerprogrammprodukt, umfassend Softwareanweisungen, die, wenn sie von einer Rechenvorrichtung implementiert werden, ein Verfahren nach einem der Ansprüche 1 bis 8 durch ein System nach Anspruch 9 implementieren.

## Claims

1. - A method of assisting the movement of a person with reduced mobility wishing to board a means of public transport (12), the person with reduced mobility being provided with a connected system emitting identification signals comprising an identifier of the person with reduced mobility;
the method comprising the following steps:
- detecting (110) the presence of the person with reduced mobility at a boarding station (30) on board the means of transport (12) by detecting the identification signals emitted by the connected system;
- determining a location (120) of the person with reduced mobility in the station (30);
- on arrival of the person with reduced mobility at a boarding platform (32) on board the means of transport (12), acquiring (130) information relating to the density of passengers in different transport zones of the means of transport (12) and determining (140) a transport zone suitable for transporting the person with reduced mobility;
the method being **characterised by** the following steps:
- broadcasting (150) on the boarding platform (32) of information intended for the person with reduced mobility and indicating access to the adapted transport area, via visual broadcasting means (34) and/or sound broadcasting means (34) present on the boarding platform (32)
- before arrival at the station (30) of the means of transport (12), broadcasting (160) in the means of transport (12) information to the passengers of this means of transport (12) indicating an upcoming entry of the person with reduced mobility.

2. - A method according to claim 1, wherein the identification signals further comprise the type of disability of the person with reduced mobility.

3. - A method according to claim 2, wherein the information for the person with reduced mobility is broadcast on the boarding platform (32) via visual broadcasting means (34) or auditory broadcasting means (34) depending on the type of disability of the person with reduced mobility.

4. - A method according to any one of the preceding claims, wherein the identification signals are transmitted by the connected system according to Bluetooth Low Energy technology or by other wireless communication means.

5. - A method according to any of the preceding claims, wherein the connected system comprises a connected object (45) and preferably a smart phone (46) separate from the connected object (45) and connected to the connected object (45);
advantageously, the connected object (45) comprising a call button and the method further comprising a step of acquiring (171) a request for help issued by the person with reduced mobility, the request for help being transmitted by the smart phone (46) following the activation by the person with reduced mobility of the call button on the connected object (45).

6. - The method according to claim 5, further comprising a step of broadcasting (172) the request for assistance issued by the person with reduced mobility to a set of registered caregivers via a smartphone belonging to each of the caregivers.

7. - The method according to claim 5 or 6, wherein the determination of the location of the person with reduced mobility is carried out by geolocation means integrated in the smartphone.

8. - The method according to any one of claims 1 to 6, wherein the determination of the location of the person with reduced mobility is carried out by triangulation of identification signals.

9. - System (10) for assisting a person with reduced mobility to move around, comprising means implementing a method according to any one of claims 1 to 8.

10. - A computer program product comprising software instructions which, when implemented by computer equipment, implement a method according to any one of claims 1 to 8 by a system according to claim 9.
